# EUROPÄISCHE PATENTSCHRIFT

(11) **EP 3 512 079 B1**
(45) Veröffentlichungstag und Bekanntmachung des Hinweises auf die Patenterteilung: **19.02.2020**
(21) Anmeldenummer: 18151157.7
(22) Anmeldetag: 11.01.2018
(51) Int. Cl.: H02K 15/04, H02K 15/00, B21F 1/04, B21F 3/00

(54) **WELLENWICKELVORRICHTUNG UND VERFAHREN ZUM HERSTELLEN EINER WELLENWICKLUNG**
WAVE WINDING DEVICE AND METHOD FOR PRODUCING A WAVE WINDING
DISPOSITIF D'ENROULEMENT ONDULÉ ET PROCÉDÉ DE FABRICATION D'UN DISPOSITIF D'ENROULEMENT ONDULÉ

(43) Veröffentlichungstag der Anmeldung: 17.07.2019
(73) Patentinhaber: Aumann Espelkamp GmbH, 32339 Espelkamp (DE)
(72) Erfinder: LÜTTGE, Wolfgang, 31787 Hameln (DE)
(74) Vertreter: Schober, Mirko

(56) Entgegenhaltungen:
- WO-A1-2017/089455
- WO-A1-2017/093477
- FR-A1- 3 020 204

## Beschreibung

Die Erfindung betrifft eine Wellenwickelvorrichtung nach dem Oberbegriff des Anspruchs 1 sowie ein Verfahren zum Herstellen einer Wellenwicklung nach dem Oberbegriff des Anspruchs 12.

Eine gattungsgemäße Vorrichtung bzw. ein gattungsgemäßes Verfahren ist beispielsweise aus EP 3 182 568 A1 oder WO 2017/089455 A1 bekannt. Bei dem dort beschriebenen Verfahren wird eine Mehrzahl Wickeldrähte dem rotierenden Formkern einer Wickeleinrichtung zugeführt. Mittels Greifern wird der auf dem Formkern befindliche Draht gegriffen und zur Herstellung der Wickelköpfe der Wellenwicklung in einer Transportrichtung bewegt und der Formkern gedreht. Dabei wird auf dem Formkern eine Wellenwicklung erzeugt, welche dann in eine Transportvorrichtung überführt wird. Die Transportvorrichtung dreht sich synchron mit dem Formkern mit, sodass die entstehende Wellenwicklung kontinuierlich erzeugt werden kann. Mit dieser Vorrichtung lassen sich Wickelmatten in beliebiger Länge mit relativ kleinem Formkern formen.

Aus FR 3 020 204 A1 ist eine Anordnung bekannt, bei der ein Übertragungskamm aus einzelnen Kammmodulen zusammengesetzt werden kann, wobei so der entstehende Kamm auf die Länge einer herzustellenden Wellenwickelmatte abgestimmt ist. Dieser Kamm, in den die Wickelmatte eingesetzt ist, wird als Übertragungsstab verwendet, um die flachliegende Wickelmatte darauf liegend einem Statorblechpaket zuzuführen.

Die bekannten Vorrichtungen weisen unter anderem den Nachteil auf, dass dort verwendete Greifer mehrfach auf die Wellenwicklung aufgesetzt werden müssen, wodurch unter Umständen Beschädigungen am Wickeldraht wahrscheinlicher werden. Zudem werden mit den bekannten Greifern Wellenwicklungen mit gleichen Wicklungsabständen erzeugt. Da diese Wellenwicklungen im Anschluss an die Herstellung einer Wickelmatte mehrlagig etwa in ein Statorblechpaket einzubringen sind, ergibt sich daraus der Nachteil, dass Wickelmatten mit identischen Wicklungsabständen sich schwieriger einbringen lassen, da die eigentlich erforderlichen Wicklungsabstände sich von Wickellage zu Wickellage ändern.

Aufgabe der vorliegenden Erfindung ist es daher, eine Wellenwickelvorrichtung und ein Verfahren zum Herstellen einer Wellenwicklung bereitzustellen, durch welche die geschilderten Nachteile vermieden werden.

Die erfindungsgemäße Wellenwickelvorrichtung umfasst dazu Folgendes:
Eine Zuführvorrichtung, die wenigstens einen Wickeldraht über wenigstens eine Wickeldüse bereitstellt und in einer Zuführrichtung transportiert, eine Wickeleinrichtung, die den zugeführten Wickeldraht aufwickelt und einen Formkern umfasst, welcher um eine Drehachse drehbar angetrieben ist und sich in einer Transportrichtung erstreckt, und eine Drahtmitführeinrichtung, welche dazu ausgelegt ist, eine oder eine Mehrzahl von auf dem Formkern liegenden(n) Wicklung(en) zu fassen und in Transportrichtung mitzuführen.

Die Drahtmitführeinrichtung umfasst dabei Folgendes:
Eine Mehrzahl lose Transportbackenelemente, welche jeweils über eine Mehrzahl Drahtaufnahmenuten verfügen, eine Transportbackenaufsetzeinrichtung, welche im Bereich des Formkerns angeordnet und dazu ausgelegt ist, die Transportbackenelemente auf den auf dem Formkern liegenden Wickeldraht aufzusetzen, eine Transportbackenaufnahmeeinrichtung, welche dazu ausgelegt ist, Transportbackenelemente aufzunehmen, und eine Transportbackenmitführeinrichtung, welche dazu ausgelegt ist, mit den Transportbackenelementen zusammenzugreifen und diese in Transportrichtung zu verschieben.

Mithilfe der lose in der Vorrichtung vorliegenden Transportbackenelemente kann eine Wellenwicklung besonders schonend erzeugt werden, indem die Transportbackenelemente lediglich einmal auf die Wicklung aufgesetzt und nach dem Erstellen der Wellenwicklung wieder abgehoben werden. Ein häufiges An- und Umgreifen ist daher nicht erforderlich, sodass der Wickeldraht beim Herstellen der Wellenwicklung besonders schonend behandelt und von Beschädigungen weitgehend verschont bleibt. Zudem ist es möglich, dass von der Mehrzahl Transportbackenelemente wenigstens einige Transportbackenelemente von anderen Transportbackenelementen verschiedene Nutabstände umfassen. Mit unterschiedlichen Nutabständen ist es möglich, im Laufe des Prozesses der Herstellung einer Wellenwicklung die Wicklungsabstände in Transportrichtung zu variieren.

Zur Beschleunigung des Herstellungsprozesses kann insbesondere vorgesehen sein, dass die erfindungsgemäße Vorrichtung weiter eine Transportbackenrückführeinrichtung umfasst. Diese Transportbackenrückführeinrichtung ist dazu ausgelegt, die von der Transportbackenaufnahmeeinrichtung aufgenommenen Transportbacken zur Transportbackenaufsetzeinrichtung zurückzuführen. Auf diese Weise steht ein entsprechendes Transportbackenelement wieder nach Gebrauch unmittelbar zur weiteren Verwendung zur Verfügung.

Nach einer bevorzugten Ausführungsform kann vorgesehen sein, dass die Transportbackenelemente Verkettungsabschnitte aufweisen, die dazu ausgebildet sind, benachbarte Transportbackenelemente miteinander zu verketten. Durch diese Verkettung lässt sich der weitere Transport aller Transportbacken stark vereinfachen, da insoweit lediglich eine Vorrichtung erforderlich ist, die eine der Transportbackenelemente in Transportrichtung mitzieht, sodass durch die Verkettung alle Transportbackenelemente in Transportrichtung bewegt werden.

Insbesondere kann gemäß einer weiteren Ausführungsform der vorliegenden Erfindung vorgesehen sein, dass die Drahtmitführeinrichtung eine Transportbackenführung aufweist, in welcher die Transportbackenelemente in Transportrichtung geführt werden können. Die so eingerichtete Führung erleichtert insbesondere auch das Mitziehen verketteter Transportbackenelemente und verhindert zuverlässig ein seitliches Abrutschen.

Um Wickelmatten erzeugen zu können, deren Länge größer ist als die Länge des Formkerns, ist nach einer weiteren Ausführungsform der vorliegenden Erfindung vorgesehen, dass die Drahtmitführeinrichtung um eine Achse parallel zur Transportrichtung synchron mit dem Formkern drehbar ist. So können in der Theorie Wellenwicklungen beliebiger Länge erzeugt und transportiert werden.

Vorteilhaft kann sein, dass in Transportrichtung hinter der Transportbackenmitführeinrichtung eine in Richtung der Wellenwicklung zustellbare und in Transportrichtung verschiebliche Pressvorrichtung angeordnet ist. So können nämlich die übereinander liegenden Wicklungen der Wellenwicklung auf eine minimale Höhe zusammen gepresst werden, was insbesondere die Wickelköpfe der fertigen Wellenwicklung möglichst raumsparend gestaltet.

Nach einer weiteren vorteilhaften Ausführungsform der vorliegenden Erfindung kann vorgesehen sein, dass die Transportbackenmitführeinrichtung in Transportrichtung verschieblich und senkrecht zur Transportrichtung in Richtung der Wellenwicklung zustellbar ist. Auf diese Weise kann erreicht werden, dass insbesondere bei verketteten Transportbacken durch die Transportbackenmitführeinrichtung jeweils ein Transportbackenelement durch Zustellen der Transportbackenmitführeinrichtung erfasst und durch Bewegen derselben in Transportrichtung verschoben werden kann. Es kann vorgesehen sein, dass die Transportbackenmitführeinrichtung auf einem Schlitten montiert ist, der sich in Transportrichtung verschieben lässt. Auch die oben erwähnte Pressvorrichtung kann auf demselben oder einem separat dazu geführten Schlitten angeordnet sein. Durch wiederholtes Zustellen und weiter Transportieren wird dann die Kette der Transportbackenelemente durch die Vorrichtung gefördert.

Nach einer weiteren bevorzugten Ausführungsform der vorliegenden Erfindung umfasst die erfindungsgemäße Wellenwickelvorrichtung eine Abstreifeinrichtung, die das Ablösen der Transportbackenelemente von der Wellenwicklung erleichtert. Das Ablösen ist erforderlich, wenn das Transportbackenelement wieder von der Wellenwicklung entfernt werden soll. Da möglicherweise die Wickeldrähte tief in den Nuten der Transportbackenelemente liegen, kann ein einfaches Abheben der Transportbackenelemente von der Wellenwicklung unter anderem dazu führen, dass die Wellenwicklung an der betreffenden Stelle lokal angehoben wird, da sich die Wicklung innerhalb der Nut verkantet. Dies wird durch das Vorsehen einer Abstreifeinrichtung vermieden.

Alternativ oder ergänzend hierzu kann vorgesehen sein, dass in Transportrichtung hinter der Drahtmitführeinrichtung eine Fördereinrichtung angeordnet ist, die die Wellenwicklung aus der Drahtmitführeinrichtung übernimmt und weiter transportiert. Eine solche Fördereinrichtung kann dann beispielsweise auch dazu verwendet werden, die aus der Wellenwicklung entstandene Wickelmatte beispielsweise einem Statorblechpaket zuzuführen, sodass die Wickelmatte dann in einem kontinuierlichen Prozess mit dem Blechpaket verbunden werden kann.

Bevorzugt kann dazu vorgesehen sein, dass die Fördereinrichtung einen Zahnriemen umfasst, dessen Zähne die Wellenwicklung mitnehmen.

Weiter betrifft die Erfindung ein Verfahren zum Herstellen einer Wellenwicklung, welches insbesondere unter Verwendung einer oben beschriebenen Wellenwickelvorrichtung durchgeführt werden kann. Erfindungsgemäß umfasst das Verfahren folgende Schritte:
i) Zuführen eines Wickeldrahtes zu einer einen Formkern aufweisenden Wickeleinrichtung;
ii) Aufwickeln des Drahtes mittels der Wickeleinrichtung durch Drehen des Formkerns;
iii) Transportieren des auf dem Formkern liegenden Drahtes in einer Transportrichtung parallel zur Drehachse des Formkerns,
iv) Auflegen wenigstens eines losen Transportbackenelements, welches über eine Mehrzahl Drahtaufnahmenuten verfügt, auf den mit dem Draht bewickelten Formkern, so dass wenigstens eine Wicklung des Drahtes in einer Drahtaufnahmenut aufgenommen ist, und
v) Verschieben des Transportbackenelements in Transportrichtung.

Bevorzugt werden dabei die Schritte iv) und v) wiederholt ausgeführt.

Mit dem erfindungsgemäßen Verfahren wird die Fertigung von Wellenwicklungen wesentlich flexibler gestaltet. Zum einen erfolgt im Gegensatz zu bekannten Verfahren ein wesentlich schonenderer Umgang mit dem Wickeldraht, in dem Transportbackenelemente eingesetzt werden. Zum anderen besteht auch eine große Vielfalt an Möglichkeiten, den Draht zuzuführen. So kann beispielsweise neben Draht mit rundem Querschnitt auch flachliegender Flachdraht ebenso wie hochkant geführter Flachdraht über die Transportbackenelemente am Formkern gehalten und zu Wellenwicklungen verarbeitet werden. Weiter eröffnen die Transportbackenelemente - wie oben erwähnt - auch die Möglichkeit, mit unterschiedlichen parallelen Abständen der zugeführten Drähte zu arbeiten, bzw. den Abstand der Drähte während des Prozesses zu verändern, indem ein Satz Transportbackenelemente eingesetzt wird, bei welchem eine Mehrzahl Transportbackenelemente unterschiedliche Nutabstände aufweisen.

Bevorzugt werden sowohl an der Oberseite als auch der Unterseite der entstehenden Wickelmatte Transportbackenelemente aufgesetzt. Nach einer bevorzugten Verfahrensvariante geschieht dies insbesondere dadurch, dass zwischen den Schritten iv) und v) der Formkern um 180° gedreht wird. Auf diese Weise ist lediglich eine Transportbackenaufsetzvorrichtung erforderlich und die Transportbackenelemente können jeweils von oben auf den Formkern aufgesetzt werden. Dies erleichtert den Prozess maßgeblich.

Nach einer bevorzugten Weiterbildung kann dabei insbesondere vorgesehen sein, dass der Verschiebeschritt v) so ausgeführt wird, dass das aufgesetzte Transportbackenelement vor der Drehung des Formkerns um 180° in Transportrichtung um etwa die halbe Länge der aufgesetzten Transportbackenelemente verschoben wird. Durch diese Maßnahme werden auf beiden Flachseiten der Wellenwicklung Ketten von Transportbackenelementen erzeugt, die um die halbe Länge der Transportbackenelemente zueinander versetzt liegen.

Vorteilhaft ist insbesondere eine Variante, bei der beim Aufsetzen eines neuen Transportbackenelements dieses mit dem jeweils in Transportrichtung unmittelbar vorauslaufenden Transportbackenelement verkettet wird. Dazu können die Transportbackenelemente an ihren in Transportrichtung liegenden Stirnseiten entsprechende Verkettungsabschnitte aufweisen. Bevorzugt sind diese so gestaltet, etwa nach Art eines Nut-und-Federprinzips, dass beim Absetzen eines Transportbackenelementes auf dem Formkern ein entsprechender Verkettungsabschnitt des aufgesetzten Transportbackenelements mit einem dazu passenden Verkettungsabschnitt des jeweils vorauslaufenden Transportbackenelements verbunden wird.

Um insbesondere eine ruhigere und bessere Führung der entstehenden Wickelmatte zu gewährleisten und insbesondere auch die spätere Übernahme einer entstehenden Wickelmatte durch eine Fördereinrichtung zu vereinfachen, kann insbesondere vorgesehen sein, dass in Schritt iv) zwei Transportbackenelemente auf den Formkern parallel beabstandet voneinander aufgesetzt werden. So kann beispielsweise der Zahnriemen einer Fördereinrichtung später zwischen den Transportbackenelementen liegende Abschnitte der Wellenwicklung greifen und weiter fördern, während die Transportbackenelemente noch auf der Wellenwicklung liegen.

Zum Ausführen des Schritts iv) kann nach einer bevorzugten Ausführungsform der vorliegenden Erfindung vorgesehen sein, dass eine in Transportrichtung verschiebliche Transportbackenmitführeinrichtung einem Transportbackenelement zunächst zugestellt wird, sodann mit dem Transportbackenelement in Eingriff gebracht, anschließend vorgeschoben und nach dem Vorschieben wieder aus dem Eingriff mit dem Transportbackenelement gelöst wird. Wiederholt man diesen Vorgang, ergibt sich eine kontinuierliche Förderung der verketteten Transportbackenelemente und damit eine kontinuierliche Förderung der durch die in der verwendeten Wellenwickelvorrichtung hergestellten Wellenwicklung.

Nach einer weiteren bevorzugten Ausführungsform ist im Prozess vorgesehen, dass die Wellenwicklung mittels einer in Transportrichtung synchron mit der Vorschubbewegung der Transportbackenelemente verschieblichen Pressvorrichtung zusammengepresst wird. Hierdurch kann der später in der Wellenwicklung von den Wickelköpfen eingenommene Raum so klein wie möglich ausgebildet werden.

Aufgrund der Tatsache, dass entsprechende Wellenwicklungen in der Regel mehrlagig um die Pole in Blechpaketen gelegt werden müssen, kann es von Vorteil sein, wenn die Wickelmatte beim Einbringen in ein solches Statorblechpaket möglichst spannungsfrei eingebracht werden kann. Da sich mit jeder Wickellage der Durchmesser der entsprechenden Wickellage verändert, nimmt die Spannung in der gesamten Wickelmatte von Lage zu Lage zu, wenn sich der Abstand der einzelnen Wicklungen zueinander nicht ändert. Folglich kann vorgesehen sein, dass eine Mehrzahl parallel verlaufende Wickeldrähte dem Formkern zugeführt und darauf aufgewickelt wird, wobei der in Transportrichtung gemessene Abstand der Wickeldrähte auf dem Formkern im Laufe des Herstellungsverfahrens der Wickelmatte verkleinert oder vergrößert wird, indem der Abstand der dem Formkern parallel zugeführten Wickeldrähte verändert wird.

Bei dieser Variante kann insbesondere vorgesehen sein, dass Transportbackenelemente verwendet werden, wobei wenigstens einige Transportbackenelemente von anderen Transportbackenelementen verschiedene Nutabstände aufweisen. Auf diese Weise kann die erzeugte Wellenwicklung durch die Transportbackenelemente auch dann ordnungsgemäß gegriffen und weiter befördert werden, wenn diese sich ändernde Wicklungsabstände aufweist. Verschiedene Nutabstände kann insbesondere heißen, dass ein erstes Transportbackenelement Nuten mit einem ersten aber konstanten Abstand aufweist und das jeweils nächste Transportbackenelement im Vergleich dazu Nuten mit kleineren oder größeren Abständen aufweist.

Die Erfindung wird nachfolgend anhand der Figuren 1 - 6 näher erläutert.
- Figur 1 -: zeigt eine perspektivische schematische Darstellung einer erfindungsgemäßen Wellenwickelvorrichtung,
- Figur 2 -: zeigt eine Schnittdarstellung entlang der Transportrichtung X durch einen Teil der erfindungsgemäßen Wellenwickelvorrichtung in einem ersten Verfahrensschritt,
- Figur 3 -: zeigt eine Schnittdarstellung aus Figur 2 in einem zweiten Verfahrensschritt,
- Figur 4 -: zeigt eine Schnittdarstellung aus Figur 2 in einem dritten Verfahrensschritt,
- Figur 5 -: zeigt eine Schnittdarstellung aus Figur 2 in einem vierten Verfahrensschritt,
- Figur 6 -: zeigt eine schematische Prozessabfolge, welche das Aufsetzen der Transportbackenelemente auf den Formkern und das Trennen der Transportbackenelemente von der hergestellten Wellenwicklung veranschaulicht.

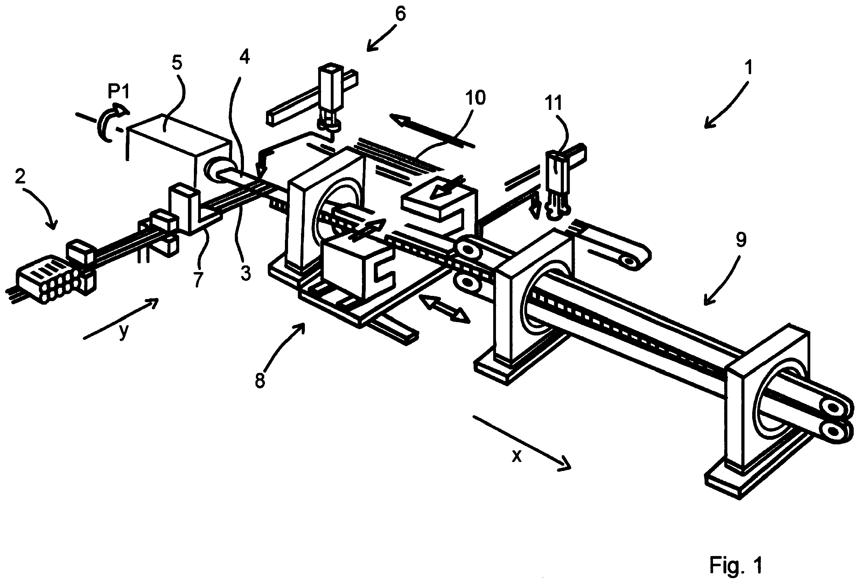

In der in Figur 1 dargestellten schematischen Anordnung der erfindungsgemäßen Wickelvorrichtung 1 wird über eine Zuführvorrichtung 2 ein bzw. eine Mehrzahl Drähte 3 in einer Zuführrichtung Y über eine bzw. eine Mehrzahl Wickeldüsen 7 einem Formkern 4 zugeführt. Der Formkern 4 ist Teil einer Wickeleinrichtung, zu der auch ein Antrieb 5 für den Formkern 4 dient. Der Formkern 4 lässt sich mit dem Antrieb 5 um eine Achse P1 drehen. Die Wickelachse P1 verläuft vorzugsweise senkrecht zur Zuführrichtung Y und parallel zur Transportrichtung X. Transportrichtung heißt die Richtung X deshalb, weil in der Richtung die auf dem Formkern 4 erstellte Wicklung weitertransportiert wird. Zum Transport der auf dem Formkern 4 erstellten Wellenwicklung dient eine Drahtmitführeinrichtung 8, die dazu ausgelegt ist, die entstehende Wellenwicklung in Transportrichtung X weiter zu transportieren. Angrenzend an die Drahtmitführeinrichtung 8 ist eine Fördereinrichtung 9 vorgesehen, die die erstellte oder noch im Erstellen befindliche Wellenwicklung übernimmt und gegebenenfalls der weiteren Bestimmung zuführt.

Im Bereich des Formkerns 4, welcher sich mit seiner Hauptlängserstreckungsrichtung in Transportrichtung erstreckt, ist eine Transportbackenaufsetzeinrichtung 6 vorgesehen, mit deren Hilfe Transportbackenelemente (in Figur 1 nicht gezeigt) auf den Formkern 4 aufgesetzt werden. Diese Transportbackenelemente werden im Folgenden über die Drahtmitführeinrichtung 8 erfasst und mitgeführt und dienen dazu, ihrerseits die Wellenwicklung zu erfassen und mitzuführen. Entsprechend ist ausgangs der Drahtmitführeinrichtung 8 eine Transportbackenaufnahmeeinrichtung 11 vorgesehen, an welcher die von der Transportbackenaufsetzeinrichtung 6 auf den Formkern bzw. die Wellenwicklung aufgesetzten Transportbackenelemente wieder von der Wellenwicklung abgehoben werden. Über eine optionale Transportbackenrückführeinrichtung 10 können die von der Transportbackenaufnahmeeinrichtung 11 aufgenommenen Transportbackenelemente sogleich wieder an die Transportbackenaufsetzeinrichtung 6 zurückgeführt werden. Im Folgenden werden die Begriffe "Transportbacken" und "Transportbackenelemente" synonym verwendet.

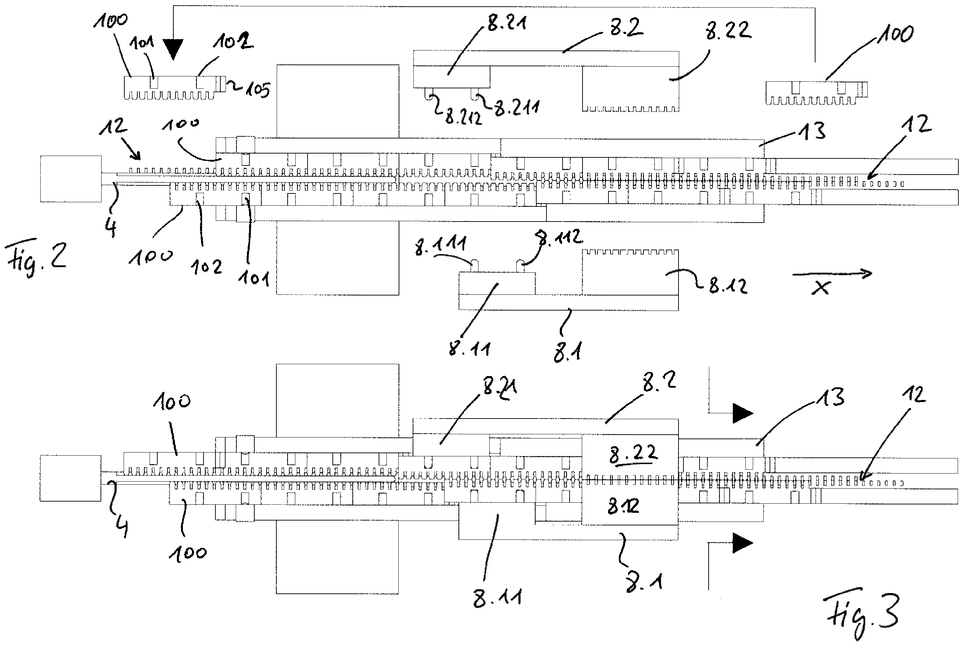

Weitere Einzelheiten des Prozesses zwischen der Transportbackenaufsetzeinrichtung 6 und der Transportbackenaufnahmeeinrichtung 11 werden nun mit Bezug auf die Figuren 2 - 6 näher erläutert.

In den nachfolgenden Figuren sind die Transportbackenelemente bzw. Transportbacken mit dem Bezugszeichen 100 bezeichnet. In Figur 2 ist dargestellt, wie ein Transportbackenelement 100 (linke Seite der Figur) auf den Formkern 4 aufgesetzt wird. Auf dem Formkern 4 befindet sich eine Mehrzahl voneinander beabstandete Wicklungen, die zusammenfassend mit dem Bezugszeichen 12 bezeichnet sind. 12 bezeichnet also insgesamt die Wellenwicklung bzw. eine aus einer Mehrzahl Wellenwicklungen gebildete Wickelmatte. Die auf dem Formkern 4 aufliegenden Wickeldrähte bzw. nebeneinander liegenden Einzeldrähte umgeben den Formkern 4. Auf der Oberseite des insgesamt flach ausgebildeten Formkerns 4 wird nun ein Transportbackenelement 100 aufgesetzt und gleichzeitig mit den in Transportrichtung X vorauslaufenden Transportbackenelementen 100 verkettet. Zum Verketten dienen insbesondere Eingriffsabschnitte 105 an der Stirnseite des Transportbackenelementes 100, welche in entsprechende Eingriffsaufnahmen eines vorauslaufenden Transportbackenelementes 100 eingreifen können. Mit Absetzen des Transportbackenelements 100 auf dem Formkern 4 wird dieses also mit dem vorauslaufenden Transportbackenelement 100 verkettet. Das Transportbackenelement 100 weist weiter auf der dem Formkern 4 zugewandten Seite eine Anzahl von Drahtaufnahmenuten auf. Jede Drahtaufnahmenut ist für einen Drahtabschnitt auf dem Formkern 4 gedacht, sodass beim Absetzen des Transportbackenelements 100 auf dem Formkern 4 in jeder der Drahtaufnahmenuten ein Teil der Wicklung 12 positioniert ist, sodass die einzelnen Wicklungen mithilfe des Transportbackenelements während des weiteren Transportprozesses in der Transportrichtung X zueinander auf Abstand gehalten werden.

In Figur 3 ist das Transportbackenelement auf dem Formkern platziert. Nun erfolgt ein Shiften des Wickeldrahtes auf dem Formkern in Transportrichtung, um den Wickeldraht im Bereich der zu bildenden Wickelköpfe der Wellenwicklung zu biegen. Dieses Shiften erfolgt bevorzugt stets durch einen Vorschub des Transportbackenelements bzw. der Kette aus Transportbackenelementen 100 um eine halbe Länge eines Transportbackenelements 100 in Transportrichtung X. Zum Verschieben der Kette aus Transportbackenelementen 100 ist im Bereich der Drahtmitführeinrichtung 8 eine Transportbackenmitführeinrichtung 8.11 bzw. 8.21 vorgesehen. Die Transportbackenmitführeinrichtung 8.11 bzw. 8.21 weist im gezeigten Beispiel als Vorsprünge ausgebildete Mitnehmerelemente 8.211, 8.212 bzw. 8.111 bzw. 8.112 auf, welche in entsprechende Eingriffsvertiefungen, die beispielsweise Bohrungen sein können, wenn die Vorsprünge zum Beispiel als Zapfen ausgebildet sind, eingreifen. Vorteilhafterweise ist eine Mehrzahl als Eingriffsvertiefungen 101, 102 ausgebildete Mitnehmergegenabschnitte an jedem Transportbackenelement 100 auf der den Drahtaufnahmenuten gegenüberliegenden Seite angeordnet, damit das jeweilige Transportbackenelement beim Mitführen durch die Transportbackenmitführeinrichtung 8.11 bzw. 8.21 nicht verkantet. Bevorzugt sind die Transportbacken auch über eine Transportbackenführung 13 im Bereich der Drahtmitführeinrichtung 8 geführt.

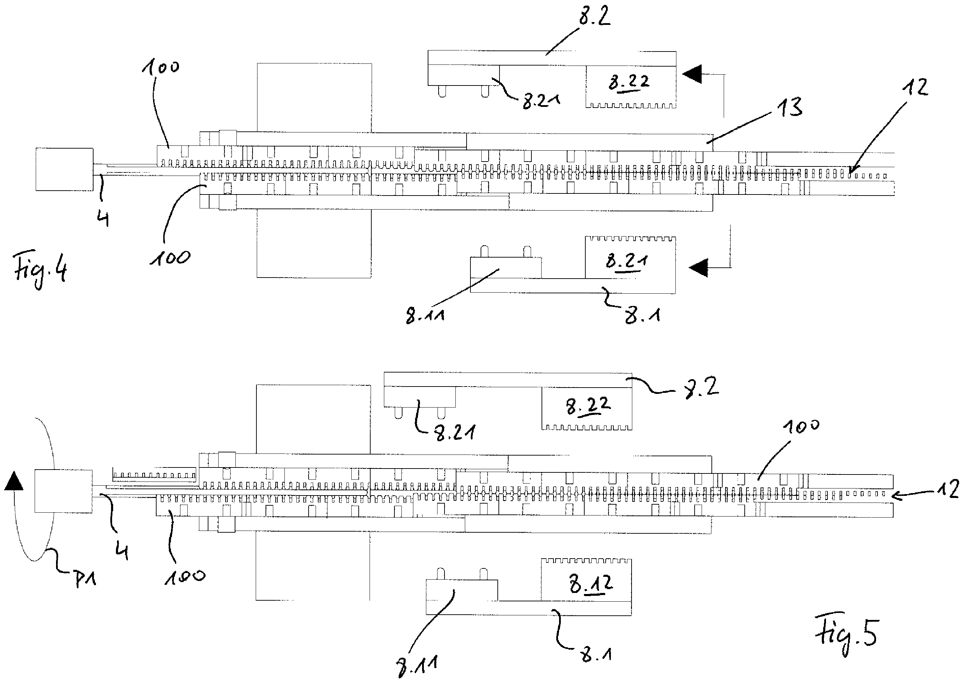

Die Transportbackenmitführeinrichtung 8.11 bzw. 8.21 ist entlang der Transportrichtung X bevorzugt auf einem Schlitten 8.1 bzw. 8.2 verschieblich gelagert und kann in Richtung senkrecht zur Transportrichtung X zur Wellenwicklung 12 in bzw. zu den auf der Wellenwicklung aufliegenden Transportbackenelementen 100 zugestellt werden. Zum kontinuierlichen Transport wird die Transportbackenmitführeinrichtung zunächst den Transportbacken zugestellt, wobei die Mitnehmerelemente 8.211, 8.212 bzw. 8.111, 8.112 mit den entsprechenden Mitnehmergegenabschnitten 101 bzw. 102 an den Transportbackenelementen 100 zusammengreifen. Aufgrund der Verkettung der Transportbackenelemente 100 genügt es, wenn lediglich ein Transportbackenelement 100 auf diese Weise mitgenommen wird. Nach dem Zustellen, also dem Herstellen des Eingriffs zwischen einem Transportbackenelement 100 und der Transportbackenmitführeinrichtung 8.11 bzw. 8.21, erfolgt eine Bewegung derselben in Transportrichtung X, bevorzugt mit einem Vorschub um die halbe Länge eines Transportbackenelements 100, wodurch die gesamte Kette aus Transportbackenelementen 100 weiter befördert wird. Auf diese Weise geschieht auf dem Formkern 4 das oben beschriebene Shiften und man erhält eine Konfiguration, wie sie in Figur 4 abgebildet ist.

Sodann wird der Eingriff zwischen Transportbackenmitführeinrichtung 8.11 bzw. 8.21 mit dem entsprechenden Transportbackenelement 100 wieder gelöst und die Transportbackenmitführeinrichtung wird wieder entsprechend entgegen der Transportrichtung X in die Ausgangslage zurückgeführt, sodass sie dort dem nächsten Transportbackenelement 100 zugestellt werden kann, sodass der eben geschilderte Ablauf wiederholt werden kann.

Bevor diese Wiederholung erfolgt, wird der Formkern 4 zunächst, wie durch den Pfeil in Figur 5 angedeutet, um 180° gedreht, sodass das um eine halbe Länge vorgerückte Transportbackenelement 100 nun in der Zeichnung auf der Unterseite des Formkerns 4 angeordnet ist. Auf der Oberseite des Formkerns 4 liegen neue Drähte frei, auf die dann ein weiteres Transportbackenelement 100 aufgesetzt werden kann, wie dies in Figur 3 und 4 angedeutet ist.

Am selben Schlitten 8.1 bzw. 8.2 kann in Transportrichtung X nach Transportbackenmitführeinrichtung 8.11 bzw. 8.21 eine Pressvorrichtung 8.21 bzw. 8.22 angeordnet sein. Genauso kann die Anordnung separat - also nicht am selben Schlitten - vorgesehen sein. Die Pressvorrichtung 8.21 bzw. 8.22 dient dazu, die erstellten Wicklungen bzw. Wickelköpfe zusammenzudrücken, nachdem die Wicklungen durch den oben geschilderten Transportprozess vom Formkern 4 abgezogen worden sind.

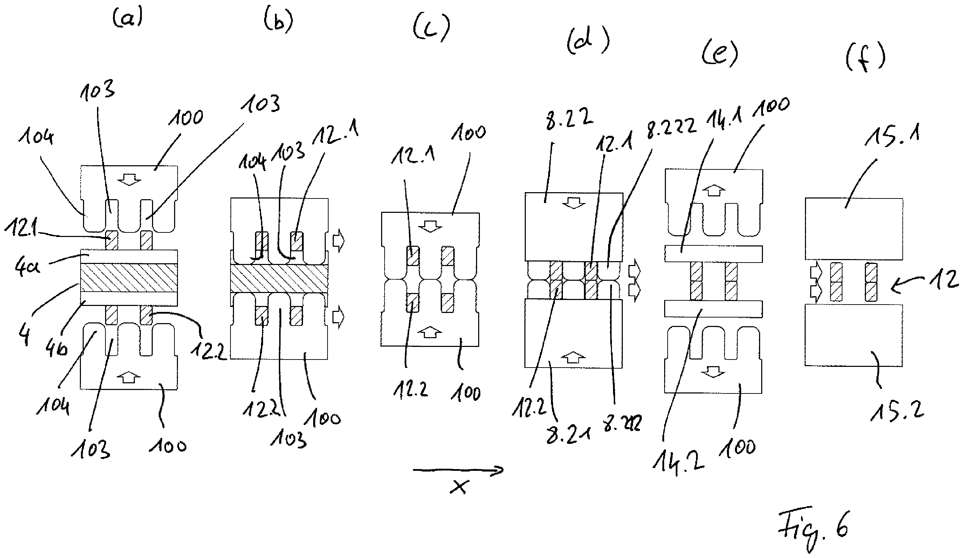

Der Prozessablauf wird aus der Figur 6 noch einmal als Ausschnittvergrößerung im Detail näher dargestellt. Die Abschnitte (a) bis (f) kennzeichnen verschiedene Abschnitte im Verlauf des Prozesses, beginnend vom Aufsetzen der Transportbackenelemente 100 auf dem Formkern 4 (a, b), gefolgt vom dem Abziehen der Wicklung vom Formkern (c), dem Verpressen der Wicklung (d), gefolgt vom Entfernen der Transportbackenelemente von der fertigen Wicklung (e) sowie endend mit dem weiteren Transport der fertigen Wicklung (f) .

Zunächst werden die Transportbackenelemente 100 auf den Formkern 4 aufgesetzt (a, b). Bevorzugt weist der Formkern 4 dazu auf der Oberseite und der Unterseite sich in Längsrichtung bzw. Transportrichtung X des Formkerns 4 erstreckende Vertiefungen bzw. Nuten 4a, 4b auf, die so bemessen sind, dass ein Teil der zwischen den Drahtaufnahmenuten 103 der Transportbackenelemente 100 liegenden Vorsprünge 104 in die entsprechenden Vertiefungen 4a bzw. 4b eintauchen kann, wobei die einzelnen Wicklungen 12.1 bzw. 12.2 in die entsprechenden Drahtaufnahmenuten 103 der Transportbackenelemente 100 aufgenommen werden. Diese Situation ist insbesondere in Abschnitt (b) dargestellt. Vorteil dieser Vertiefungen 4a bzw. 4b ist, dass die entsprechenden Wicklungen 12.1 bzw. 12.2 bis in den Boden der Drahtaufnahmenuten 103 gedrückt werden, sodass sie beim weiteren Transport und nach dem Abstreifen (c) der Wicklung 12 vom Formkern 4 nicht wieder aus den Transportbackenelementen 100 herausrutschen.

Über Presswerkzeuge 8.21 bzw. 8.22 werden nach dem Abstreifen (d) der Transportbackenelemente vom Formkern 4 die entsprechenden Windungen aneinander gepresst. Mithilfe von Abstandelementen 8.212 bzw. 8.222 an den Presswerkzeugen 8.21 bzw. 8.22 wird dabei sichergestellt, dass die Wickelmatte 12 mit ihren Windungen 12.1 bzw. 12.2 beim Verpressen nicht zerquetscht bzw. beschädigt wird. Nach dem Pressvorgang werden die Transportbackenelemente 100 von der Wellenwicklung 12 entfernt und der weiteren Verwendung zugeführt (e). Dabei ist es dienlich, mittels eines Abstreifers 14.1, 14.2 die Transportbackenelemente 100 und Wellenwicklung voneinander zu trennen, da die Wicklungen sonst möglicherweise in den Drahtaufnahmenuten der Transportbackenelemente 100 verkanten. Schließlich wird die fertige Wellenwicklung 12 in Gestalt einer Wickelmatte in Transportrichtung X weitertransportiert (f), wobei sie über Führungselemente 15.1 bzw. 15.2 transportiert werden kann, die insbesondere als Zahnriemen ausgebildet sein können, sodass die Zähne zwischen die einzelnen Windungen greifen können.

In den Zeichnungen nicht gezeigt ist, dass zu diesem Zweck in Breitenrichtung der Wellenwicklung 12 parallel zueinander mehrere Transportbackenelemente gleichzeitig auf den Formkern 4 und die darauf befindlichen Windungen aufgesetzt werden können. Sind die Transportbackenelemente 100 insoweit in Breitenrichtung der entstehenden Wellenwicklung voneinander beabstandet, so kann beispielsweise eine an die Drahtmitnahmeeinrichtung 8 angrenzende Fördereinrichtung mit einem Zahnriemen zwischen zwei parallel angeordnete Transportbacken 100 greifen. Auf diese Weise wird sichergestellt, dass die Wickelmatte 12 auch beim Ablösen der Transportbackenelemente (e) bereits von der anschließenden Fördereinrichtung erfasst und übernommen werden kann. So kann verhindert werden, dass die Wickelmatte 12 in diesem Bereich verrutscht oder ihre Position verliert.

Wie weiter oben erwähnt, ist es mit den losen Transportbackenelementen möglich, Wickelmatten 12 zu erzeugen, die in Verlaufsrichtung X veränderliche Wicklungsabstände aufweisen, um beispielsweise das Einbringen einer fertigen Wickelmatte in ein Blechpaket zu erleichtern. Dazu kann die erfindungsgemäße Vorrichtung einen Satz Transportbackenelemente 100 aufweisen, die jeweils unterschiedliche Nutabstände aufweisen.

## Patentansprüche

1. Wellenwickelvorrichtung (1), umfassend:
eine Zuführvorrichtung (2), die wenigstens einen Wickeldraht (3) über wenigstens eine Wickeldüse (7) bereitstellt und in einer Zuführrichtung (Y) transportiert,
eine Wickeleinrichtung (5, 4), die den zugeführten Wickeldraht (3) aufwickelt und einen Formkern umfasst,
welcher um eine Drehachse (P1) drehbar angetrieben ist und sich in einer Transportrichtung (X) erstreckt,
eine Drahtmitführeinrichtung (8), welche dazu ausgelegt ist, eine oder eine Mehrzahl von auf dem Formkern (4) liegenden(n) Wicklung(en) zu fassen und in Transportrichtung mitzuführen,
die Drahtmitführeinrichtung (8) umfasst Folgendes:
eine Mehrzahl Transportbackenelemente (100), welche jeweils über eine Mehrzahl Drahtaufnahmenuten (103) verfügen,
eine Transportbackenaufsetzeinrichtung (6), welche im Bereich des Formkerns (4) angeordnet und dazu ausgelegt ist, Transportbackenelemente (100) auf den auf dem Formkern (4) liegenden Wickeldraht (3) aufzusetzen,
eine Transportbackenaufnahmeeinrichtung (11), welche dazu ausgelegt ist, Transportbackenelemente (100) aufzunehmen, und
eine Transportbackenmitführeinrichtung (8.11, 8.21), welche dazu ausgelegt ist, mit den Transportbackenelementen (100) zusammenzugreifen und diese in Transportrichtung (X) zu verschieben, und **dadurch gekennzeichnet, dass** die Transportbackenelemente (100) lose sind.

2. Wellenwickelvorrichtung (1) nach Anspruch 1,
**dadurch gekennzeichnet,**
**dass** sie weiter eine Transportbackenrückführeinrichtung (10) umfasst, die dazu ausgelegt ist, die von der Transportbackenaufnahmeeinrichtung (11) aufgenommenen Transportbackenelemente (100) zur Transportbackenaufsetzeinrichtung (6) zurückzuführen.

3. Wellenwickelvorrichtung (1) nach einem der vorigen Ansprüche,
**dadurch gekennzeichnet,**
**dass** die Transportbackenelemente (100) Verkettungsabschnitte aufweisen, die dazu ausgebildet sind, benachbarte Transportbackenelemente (100) miteinander zu verketten.

4. Wellenwickelvorrichtung (1) nach einem der vorigen Ansprüche,
**dadurch gekennzeichnet,**
**dass** die Drahtmitführeinrichtung(8) eine Transportbackenführung aufweist, in welcher die Transportbackenelemente (100) in Transportrichtung (X) geführt werden können.

5. Wellenwickelvorrichtung (1) nach einem der vorigen Ansprüche,
**dadurch gekennzeichnet,**
**dass** von der Mehrzahl Transportbackenelemente (100) wenigstens einige Transportbackenelemente (100) von anderen Transportbackenelementen (100) verschiedene Nutabstände umfassen.

6. Wellenwickelvorrichtung (1) nach einem der vorigen Ansprüche,
**dadurch gekennzeichnet,**
**dass** die Drahtmitführeinrichtung (8) um eine Achse parallel zur Transportrichtung (X) synchron mit dem Formkern (4) drehbar ist.

7. Wellenwickelvorrichtung (1) nach einem der vorigen Ansprüche,
**dadurch gekennzeichnet,**
**dass** in Transportrichtung (X) hinter der Transportbackenmitführeinrichtung (8.11, 8.21) eine in Richtung der Wellenwicklung (12) zustellbare und in Transportrichtung (X) verschiebliche Pressvorrichtung (8.12, 8.22) angeordnet ist.

8. Wellenwickelvorrichtung (1) nach einem der vorigen Ansprüche,
**dadurch gekennzeichnet,**
**dass** die Transportbackenmitführeinrichtung (8.11, 8.21) in Transportrichtung (X) verschieblich und senkrecht zur Transportrichtung in Richtung der Wellenwicklung zustellbar ist.

9. Wellenwickelvorrichtung (1) nach einem der vorigen Ansprüche,
**dadurch gekennzeichnet,**
**dass** sie eine Abstreifeinrichtung (14.1, 14.2) umfasst, die das Ablösen der Transportbackenelemente (100) von der Wellenwicklung (12) erleichtert.

10. Wellenwickelvorrichtung (1) nach einem der vorigen Ansprüche,
**dadurch gekennzeichnet,**
**dass** in Transportrichtung (X) hinter der Drahtmitführeinrichtung (8) eine Fördereinrichtung (9) angeordnet ist, die die Wellenwicklung (12) aus der Drahtmitführeinrichtung (8) übernimmt und weiter transportiert.

11. Wellenwickelvorrichtung (1) nach Anspruch 10,
**dadurch gekennzeichnet,**
**dass** die Fördereinrichtung (9) einen Zahnriemen umfasst, dessen Zähne die Wellenwicklung (12) mitnehmen.

12. Verfahren zum Herstellen einer Wellenwicklung, insbesondere unter Verwendung einer Wellenwickelvorrichtung (1) nach einem der vorigen Ansprüche, wobei das Verfahren Folgendes umfasst:
i) Zuführen eines Wickeldrahtes (3) zu einer einen Formkern (4) aufweisenden Wickeleinrichtung (4, 5);
ii) Aufwickeln des Drahtes (3) mittels der Wickeleinrichtung (4, 5) durch Drehen des Formkerns;
iii) Transportieren des auf dem Formkern (4) liegenden Drahtes (3) in einer Transportrichtung (X) parallel zur Drehachse (P1) des Formkerns (4),
**gekennzeichnet durch**
iv) Auflegen wenigstens eines losen Transportbackenelements (100), welches über eine Mehrzahl Drahtaufnahmenuten (103) verfügt, auf den mit dem Draht (3) bewickelten Formkern (4), so dass wenigstens eine Wicklung des Drahtes (3) in einer Drahtaufnahmenut (103) aufgenommen ist, und
v) Verschieben des Transportbackenelements (100) in Transportrichtung (X).

13. Verfahren nach Anspruch 12,
**dadurch gekennzeichnet,**
**dass** die Schritte iv) und v) wiederholt ausgeführt werden.

14. Verfahren nach Anspruch 12 oder 13,
**dadurch gekennzeichnet,**
**dass** zwischen den Schritten iv) und v) der Formkern (4) um 180° gedreht wird.

15. Verfahren nach Anspruch 14,
**dadurch gekennzeichnet,**
**dass** der Verschiebeschritt v) so ausgeführt wird, dass das aufgesetzte Transportbackenelement (100) vor der Drehung des Formkerns (4) um 180° in Transportrichtung (X) um etwa die halbe Länge der aufgesetzten Transportbackenelemente (100) verschoben wird.

16. Verfahren nach einem der Ansprüche 12 bis 15,
**dadurch gekennzeichnet,**
**dass** beim Aufsetzen eines neuen Transportbackenelements, dieses mit dem jeweils in Transportrichtung (X) unmittelbar vorauslaufenden Transportbackenelement (100) verkettet wird.

17. Verfahren nach einem der Ansprüche 12 bis 16,
**dadurch gekennzeichnet,**
**dass** in Schritt iv) zwei Transportbackenelemente (100) auf den Formkern parallel beabstandet voneinander aufgesetzt werden.

18. Verfahren nach einem der Ansprüche 12 bis 17,
**dadurch gekennzeichnet,**
**dass** zum Ausführen des Schritts iv) eine in Transportrichtung (X) verschiebliche Transportbackenmitführeinrichtung (8.11, 8.21) einem Transportbackenelement (100) zugestellt, mit dem Transportbackenelement (100) in Eingriff gebracht, anschließend vorgeschoben und nach dem Vorschieben wieder aus dem Eingriff mit dem Transportbackenelement gelöst wird.

19. Verfahren nach einem der Ansprüche 12 bis 18,
**dadurch gekennzeichnet,**
**dass** die Wellenwicklung (12) mittels einer in Transportrichtung (X) synchron mit der Vorschubbewegung der Transportbackenelemente (100) verschieblichen Pressvorrichtung (8.12, 8.22) zusammengepresst wird.

20. Verfahren nach einem der Ansprüche 12 bis 18,
**dadurch gekennzeichnet,**
**dass** eine Mehrzahl parallel verlaufende Wickeldrähte dem Formkern (4) zugeführt und aufgewickelt wird, wobei der in Transportrichtung (X) gemessene Abstand der Wickeldrähte (3) auf dem Formkern (4) im Laufe des Herstellungsverfahrens der Wickelmatte (12) verkleinert oder vergrößert wird, indem der Abstand der dem Formkern (4) parallel zugeführten Wickeldrähte (3) verändert wird.

21. Verfahren nach Anspruch 20,
**dadurch gekennzeichnet,**
**dass** Transportbackenelemente (100) verwendet werden, von denen wenigstens einige Transportbackenelemente (100) von anderen Transportbackenelementen (100) verschiedene Nutabstände aufweisen.

## Claims

1. Wave winding device (1), comprising:
a supply device (2) which provides at least one winding wire (3) via at least one winding nozzle (7) and transports it in a supply direction (Y),
a winding device (5, 4) which winds up the supplied winding wire (3) and comprises a mould core which is driven in rotation about an axis of rotation (P1) and extends in a transport direction (X),
a wire entrainment device (8) which is designed to seize one or more of the windings lying on the mould core (4) and entrain them in the transport direction,
the wire entrainment device (8) comprises the following:
a plurality of transport jaw elements (100) which each have a plurality of wire receiving grooves (103),
a transport jaw positioning device (6) which is arranged in the region of the mould core (4) and is designed to set the transport jaw elements (100) onto the winding wire (3) lying on the mould core (4),
a transport jaw receiving device (11) which is designed to receive transport jaw elements (100), and
a transport jaw entrainment device (8.11, 8.21) which is designed to engage together with the transport jaw elements (100) and move these in the transport direction (X), and **characterised in that** the transport jaw elements (100) are loose.

2. Wave winding device (1) according to claim 1,
**characterised in that**
it further comprises a transport jaw return device (10) which is designed to return the transport jaw elements (100) received by the transport jaw receiving device (11) back to the transport jaw receiving device (6).

3. Wave winding device (1) according to one of the preceding claims,
**characterised in that**
the transport jaw elements (100) have interlinking portions which are designed to interlink the adjoining transport jaw elements (100) with one another.

4. Wave winding device (1) according to one of the preceding claims
**characterised in that**
the wire entrainment device (8) has a transport jaw guide in which the transport jaw elements (100) can be guided in the transport direction (X).

5. Wave winding device (1) according to one of the preceding claims,
**characterised in that**
of the plurality of transport jaw elements 100) at least some transport jaw elements (100) comprise groove spacings which are different from the other transport jaw elements (100).

6. Wave winding device (1) according to one of the preceding claims
**characterised in that**
the wire entrainment device (8) is able to rotate about an axis parallel to the transport direction (X) synchronously with the mould core (4).

7. Wave winding device (1) according to one of the preceding claims
**characterised in that**
a pressing device (8.12, 8.22) is arranged in the transport direction (X) behind the transport jaw entrainment device (8.11, 8.21) and can be delivered in the direction of the wave winding (12) and is displaceable in the transport direction (X).

8. Wave winding device (1) according to one of the preceding claims
**characterised in that**
the transport jaw entrainment device (8.11, 8.21) can be set up displaceable in the transport direction (X) and delivered perpendicularly to the transport direction in the direction of the wave winding.

9. Wave winding device (1) according to one of the preceding claims
**characterised in that**
it comprises a stripper device (14.1, 14.2) which makes it easier to release the transport jaw elements (100) from the wave winding (12).

10. Wave winding device (1) according to one of the preceding claims
**characterised in that**
a conveying device (9) is arranged in the transport direction (X) behind the wire entrainment device (8) and takes over the wave winding (12) from the wire entrainment device (8) and moves it further on.

11. Wave winding device (1) according to claim 10,
**characterised in that**
the conveying device (9) comprises a toothed belt whose teeth entrain the wave winding (12).

12. Method for producing a wave winding, in particular by using a wave winding device (1) according to one of the preceding claims, wherein the method comprises the following:
i) Supplying a winding wire (3) to a winding device (4, 5) comprising a mould core (4);
ii) Winding up the wire (3) by means of the winding device (4, 5) by rotating the mould core;
iii) Transporting the wire (3) lying on the mould core (4) in a transport direction (X) parallel to the axis of rotation (P1) of the mould core (4),
**characterised by**
iv) Laying at least one loose transport jaw element (100), which has a plurality of wire receiving grooves (103), on the mould core (4) wound with the wire (3) so that at least one winding of the wire (3) is received in a wire receiving groove (103), and
v) Moving the transport element (100) in the transport direction (X).

13. Method according to claim 12,
**characterised in that**
the steps (iv) and v) are carried out repeatedly.

14. Method according to claim 12 or 13
**characterised in that**
the mould core (4) is turned 180° between steps iv) and v) .

15. Method according to claim 14,
**characterised in that**
the displacement step v) is carried out so that before the mould core (4) is turned round 180° the positioned transport jaw element (100) is moved in the transport direction (X) by about half the length of the positioned transport jaw elements (100).

16. Method according to one of claims 12 to 15
**characterised in that**
when setting down a new transport jaw element it is interlinked with the transport jaw element (100) directly preceding it in the transport direction (X).

17. Method according to one of claims 12 to 16
**characterised in that**
in step iv) two transport jaw elements (100) are set down on the mould core parallel to and spaced from one another.

18. Method according to one of claims 12 to 17
**characterised in that**
in order to carry out step iv) a transport jaw entrainment device (8.11, 8.21) which is displaceable in the transport direction (X) is delivered to a transport jaw element (100), brought into engagement with the transport jaw element (100), then moved forwards and, after moving forwards, is released again from the engagement with the transport jaw element.

19. Method according to one of claims 12 to 18
**characterised in that**
the wave winding (12) is compressed by means of a pressing device (8.12, 8.22) which is displaceable in the transport direction (X) synchronously with the forward advancing movement of the transport jaw elements (100).

20. Method according to one of claims 12 to 18
**characterised in that**
a plurality of winding wires running in parallel are supplied to and wound on the mould core (4) wherein the spacing of the winding wires (3), measured in the transport direction (X), on the mould core (4) is reduced or increased during the course of the manufacturing process of the winding mat (12) by changing the spacing of the winding wires (3) which are supplied in parallel to the mould core (4).

21. Method according to claim 20,
**characterised in that**
transport jaw elements (100) are used of which at least some transport jaw elements (100) have groove spacings which are different from other transport jaw elements (100) .

## Revendications

1. Dispositif d'enroulement d'arbre (1) comprenant:
un dispositif d'alimentation (2) qui met à disposition au moins un fil d'enroulement (3) par l'intermédiaire d'une buse d'enroulement (7) et le transporte dans une direction d'alimentation (Y),
un dispositif d'enroulement (5, 4) qui enroule le fil d'enroulement (3) amené et qui comprend un noyau de moule, qui est entraînée en rotation autour d'un axe de rotation (P1) et qui s'étend dans une direction de transport (X),
un dispositif d'entraînement de fil (8) qui est conçu pour saisir un ou plusieurs enroulement(s) se trouvant sur le noyau de moule (4) et le/les entraîner dans la direction de transport,
le dispositif d'entraînement de fil (8) comprenant ce qui suit:
une pluralité d'éléments à joue de transport (100) qui disposent chacun d'une pluralité de rainures de réception de fil (103),
un dispositif de mise en place de joue de transport (6)), lequel est disposé dans la région du noyau de moule (4) et est aménagé pour poser des éléments à joue de transport (100) sur le fil d'enroulement (3) se trouvant sur le noyau de moule (4),
un dispositif de réception de joue de transport (11),
lequel est aménagé pour recevoir des éléments à joue de transport (100), et
un dispositif d'entrainement de joue de transport (8.11, 8.21), lequel est aménagé pour s'engrener avec les éléments à joue de transport (100) et déplacer ceux-ci dans la direction de transport (X), et
**caractérisé en ce que**
les éléments à joue de transport (100) ne sont pas assemblés.

2. Dispositif d'enroulement d'arbre (1) selon la revendication 1,
**caractérisé en ce**
**qu'**il comprend de plus un dispositif de transport en retour (10), qui est aménagé pour ramener au dispositif de mise en place de joue de transport (6)) les éléments à joue de transport (100) réceptionnés par le dispositif de réception de joue de transport (11).

3. Dispositif d'enroulement d'arbre (1) selon l'une des revendications précédentes,
**caractérisé en ce que**
les éléments à joue de transport (100) présentent des sections d'enchaînement, qui sont conçus pour enchainer ensemble des éléments à joue de transport (100) voisins.

4. Dispositif d'enroulement d'arbre (1) selon l'une des revendications précédentes,
**caractérisé en ce que**
le dispositif d'entraînement de fil (8) présente un guidage de joues de transport, dans lequel les éléments à joue de transport (100) peuvent être conduits dans la direction de transport (X).

5. Dispositif d'enroulement d'arbre (1) selon l'une des revendications précédentes,
**caractérisé en ce que**,
de la pluralité d'éléments à joue de transport (100), au moins quelques éléments à joue de transport (100) comprennent des intervalles de rainures qui diffèrent de ceux des autres éléments à joue de transport (100).

6. Dispositif d'enroulement d'arbre (1) selon l'une des revendications précédentes,
**caractérisé en ce que** le dispositif d'entraînement de fil (8) peut tourner autour d'un axe parallèle à la direction de transport (X) de manière synchrone par rapport noyau de moule (4).

7. Dispositif d'enroulement d'arbre (1) selon l'une des revendications précédentes,
**caractérisé en ce que**,
dans la direction de transport (X), derrière le dispositif d'entraînement de joues de transport (8.11, 8.21), est disposé un dispositif de pression (8,12, 8.22)), qui peut être mis à disposition dans la direction de l'enroulement d'arbre (12) et déplacé dans la direction de transport (X).

8. Dispositif d'enroulement d'arbre (1) selon l'une des revendications précédentes,
**caractérisé en ce que**
le dispositif d'entraînement de joues de transport (8.11, 8.21) peut être déplacé dans la direction de transport (X) et mis à disposition dans la direction de l'enroulement d'arbre verticalement par rapport à la direction de transport.

9. Dispositif d'enroulement d'arbre (1) selon l'une des revendications précédentes,
**caractérisé en ce**
**qu'**il comprend un dispositif d'enlèvement (14.1, 14.2), qui facilite l'enlèvement des éléments à joue de transport (100) de l'enroulement d'arbre (12).

10. Dispositif d'enroulement d'arbre (1) selon l'une des revendications précédentes,
**caractérisé en ce que**,
dans la direction de transport (X), derrière le dispositif d'entraînement de fil (8), est disposé un dispositif de transport (9), qui prend l'enroulement d'arbre (12) à partir du dispositif d'entraînement de fil (8) et le transporte plus loin.

11. Dispositif d'enroulement d'arbre (1) selon la revendication 10,
**caractérisé en ce que**
le dispositif de transport (9) comprend une courroie dentée, dont les dents entraînent l'enroulement d'arbre (12) .

12. Procédé de fabrication d'un enroulement d'arbre, en particulier en utilisant un dispositif d'enroulement d'arbre (1) selon l'une des revendications précédentes, sachant que le procédé est exécuté comme suit:
i) amenée d'un fil d'enroulement (3) à un dispositif d'enroulement (4, 5), qui comprend un noyau de moule (4),
ii) enroulement du fil d'enroulement (3) au moyen du dispositif d'enroulement (4, 5) par rotation su noyau de moule,
iii) transport du fil d'enroulement (3), déposé sur le noyau de moule (4), dans une direction de transport (X), parallèlement à l'axe de rotation (P1) du noyau de moule (4),
**caractérisé par**
iv) mise en place d'au moins un élément à joue de transport (100) libre, qui dispose de plusieurs rainures de réception de fil (103), sur le noyau de moule (4) enroulé de fil (3), de manière à ce qu'au moins un enroulement de fil (3) soit logé dans une rainure de réception de fil (103), et
v) déplacement de l'élément à joue de transport (100) dans la direction de transport (X).

13. Procédé selon la revendication 12,
**caractérisé en ce que**
les étapes iv) et v) sont exécutées plusieurs fois.

14. Procédé selon revendication 12 ou 13,
**caractérisé en ce que**
le noyau de moule (4) est tourné de 180 ° entre les étapes iv) et v).

15. Procédé selon la revendication 14,
**caractérisé en ce que**
l'étape de déplacement v) est exécutée de manière à ce que, avant le pivotement de 180 ° du noyau de moule (4), l'élément à joue de transport (100) posé st déplacé dans la direction de transport (X) d'environ la demi-longueur des éléments à joue de transport (100) posés.

16. Procédé selon l'une des revendications 12 à 15,
**caractérisé en ce que**,
lors de la mise en place d'UN nouvel élément à joue de transport (100), celui-ci enchainé avec l'élément à joue de transport (100) le précédant directement dans la direction de transport (X).

17. Procédé selon l'une des revendications 12 à 16,
**caractérisé en ce que**,
dans l'étape (iv), deux éléments à joue de transport (100) sont placés parallèlement sur le noyau de moule, à distance l'un de l'autre.

18. Procédé) selon l'une des revendications 12 à 17,
**caractérisé en ce que**,
pour l'exécution de l'étape (iv), un dispositif d'entraînement de joues de transport (8.11, 8.21), déplaçable dans la direction de transport (X), est associé à un élément à joue de transport (100), est mis en prise avec l'élément à joue de transport (100), puis poussé en avant et remis hors de prise avec l'élément à joue de transport (100) après la poussée en avant.

19. Procédé selon l'une des revendications 12 à 18,
**caractérisé en ce que**
l'enroulement d'arbre (12) est comprimé au moyen d'un dispositif de pression (8.12, 8.22) qui peut être déplacé dans la direction de transport (X) en synchronisation avec le mouvement d'avance des éléments à joue de transport (100).

20. Procédé selon l'une des revendications 12 à 18,
**caractérisé en ce que**
plusieurs fils d'enroulement s'étendant parallèlement sont conduits au noyau de moule (4) et enroulés, sachant que l'intervalle des fils d'enroulement (3) mesuré dans la direction de transport (X) est diminué ou augmenté, sur le noyau de moule (4) au cours du procédé de fabrication de du mat d'enroulent (12) par modification de l'intervalle des fils d'enroulement (3) conduits parallèlement au noyau de moule (4).

21. Procédé selon la revendication 20,
**caractérisé en ce que**
des éléments à joue de transport (100) sont utilisés, dont au moins quelques éléments à joue de transport (100) présentent des intervalles de rainures qui diffèrent de ceux des autres éléments à joue de transport (100).
